# EUROPEAN PATENT APPLICATION

(11) **EP 1 626 542 A1**
(43) Date of publication of application: **15.02.2006**
(21) Application number: 05016971.3
(22) Date of filing: 04.08.2005
(51) Int. Cl.: H04L 12/56, H04Q 7/38

(54) **Multicast system and multicast method**

(30) Priority: 11.08.2004 JP 2004233977
(71) Applicant: NEC CORPORATION, Tokyo (JP)
(72) Inventor: Uno, Hiroyuki, Minato-ku Tokyo (JP)
(74) Representative: Glawe, Delfs, Moll

(57) **Abstract**

Provided is a multicast system including: a multicast server for multicasting data to terminals within a group; a distribution server; and a terminal for transmitting data to the multicast server. The distribution server receives, from the terminals within the group, information containing specifications of the terminals, and transmits, to each terminal within the group, the specifications of all the terminals within the group. The terminal includes a unit for processing data to be multicast based on the specifications of all the terminals within the group.

## Description

### BACKGROUND OF THE INVENTION

### 1. Field of the Invention

The present invention relates to a multicast system, a terminal therefor, and a multicast method, and more particularly to a multicast system in which data to be multicast to terminals within a group is processed.

### 2. Description of the Related Art

Examples of known multicast systems include a system using push to talk over cellular (PoC) as disclosed in JP 2003-526275 A. The PoC is used for a device such as a walkie talkie using an internet protocol in mobile communications. The system provides one-way communications. In the PoC, like in an instant messaging, callees are grouped, and states of the callees can be recognized.

In the PoC, selection of one or a plurality of callees in a callable state, followed by pressing a call button, enables calling. The PoC is a transceiver mode of a cellular telephone. In the PoC, it is unnecessary to dial the number of a callee, the time required for establishing a connection is short, and a caller can call a plurality of callees simultaneously.

In the multicast system, a terminal may multicast data containing, for example, an image. In that case, some terminals may be unable to display or receive image data. It is because the terminals do not have enough specifications required for displaying the image data. In multicast systems currently available, it is impossible topreviously recognize the existence of the terminal unable to display the multicast image data.

### SUMMARY OF THE INVENTION

In order to solve the above-mentioned problem, according to an aspect of the present invention, there is provided a multicast system including a multicast server, a distribution server, and a terminal. The multicast server multicasts data to terminals within a group. The distribution server receives, from the terminals, information containing specifications of the terminals, and transmits, to each terminal within the group, the specifications of all the terminals within the group. The terminal transmits, to the multicast server, data to be multicast. The terminal includes a data processing unit for processing the data to be transmitted to the multicast server based on the information received from the distribution server.

According to another aspect of the present invention, there is provided a terminal that multicasts data to other terminals within a group via the multicast server. The terminal includes a data processing unit for processing the data based on the specifications of all the terminals within the group.

According to another aspect of the present invention, there is provided a method of multicasting data from one terminal to other terminals within a group. The method includes: transmitting information containing specifications of the terminals to a distribution server;receivingthespecifications of all the terminals within the group from the distribution server; processing data to be multicast based on the specifications; and transmitting the processed data to the multicast server.

According to the above-mentioned aspects of the present invention, all the terminals participating in the group can receive the multicast data, and terminals capable of image display can display an image contained in the received data.

### BRIEF DESCRIPTION OF THE DRAWINGS

The above and other objects, features and advantages of the present invention will become apparent form the following detailed description when taken with the accompanying drawings in which:
FIG. 1 is a block diagram showing an example of a multicast system according to the present invention;
FIG. 2 is a block diagram showing an example of a terminal according to the present invention;
FIG. 3 is a block diagram showing an example of a distribution server according to the present invention;
FIG. 4 shows an operational example of a multicast system according to the present invention;
FIG. 5 shows the operational example of the multicast system according to the present invention;
FIG. 6 shows the operational example of the multicast system according to the present invention;
FIG. 7 shows the operational example of the multicast system according to the present invention;
FIG. 8 shows the operational example of the multicast system according to the present invention;
FIG. 9 shows the operational example of the multicast system according to the present invention;
FIG. 10 is a flowchart showing an operational example of the distribution server;
FIG. 11 is a flowchart showing an operational example of the terminal;
FIG. 12 is a flowchart showing another operational example of the terminal;
FIG. 13 is a flowchart showing another operational example of the terminal; and
FIG. 14 is a flowchart showing another operational example of the terminal.

### DETAILED DESCRIPTION OF THE PREFERRED EMBODIMENTS

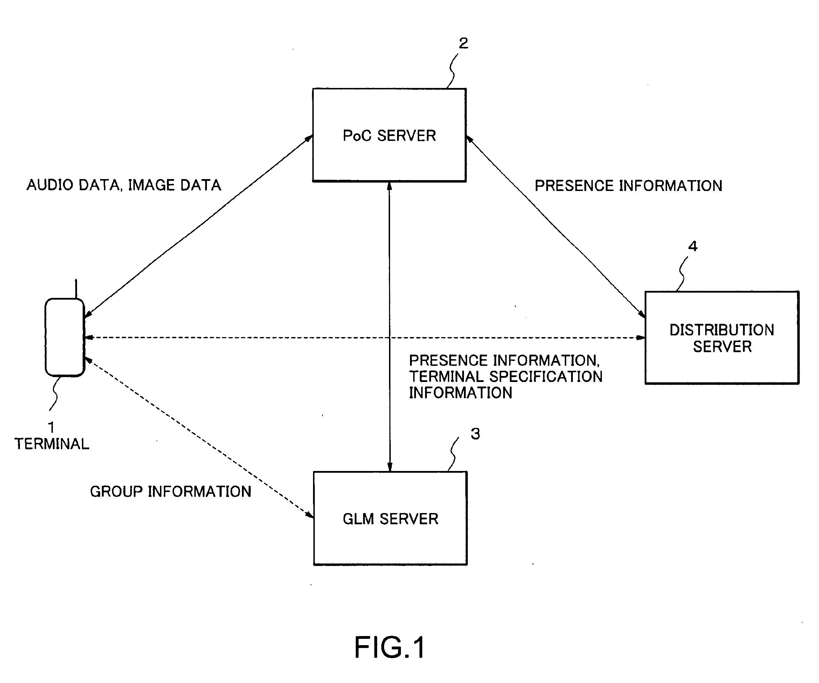

Described below is a multicast system according to a preferred exemplary embodiment of the present invention. Referring to FIG. 1, the multicast system of this exemplary embodiment includes: a terminal 1; a push to talk over cellular (PoC) server 2; a distribution server 4; and a group and list management (GLM) server 3. To participate in a group, the terminal 1 allowed to use PoC transmits information containing specifications of the own terminal and presence information to the distribution server 4. The presence information is information indicating whether the terminal 1 is in an online state or in an offline state. The distribution server 4 stores the specifications of the terminal 1 in a memory. When a new terminal 1 participates in the group, the distribution server 4 distributes terminal specification information of all the terminals within the group and the presence information, to all the terminals within the group. For example, a person who hosts a PoC conference transmits group information (information on terminal users (i.e. group members)) to the GLM server 3.

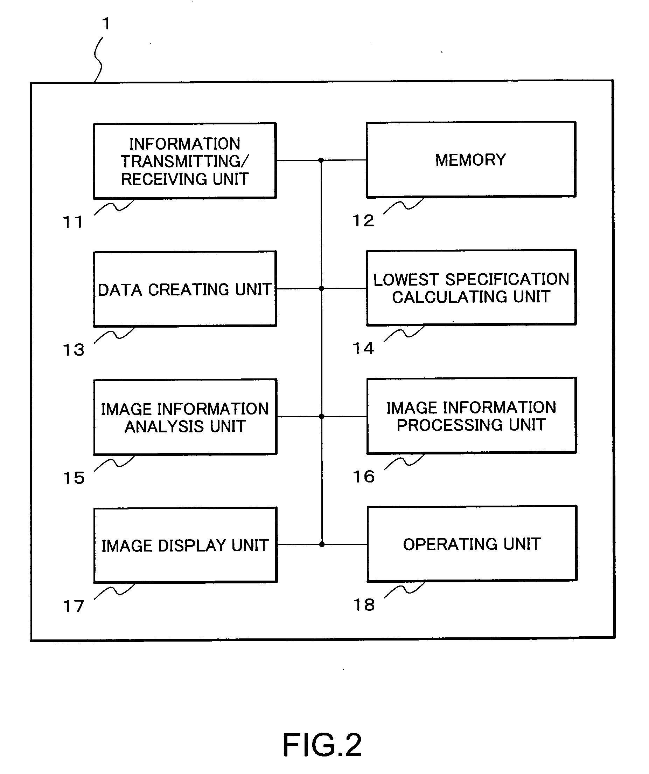

Referring to FIG. 2, the terminal 1 of this exemplary embodiment includes: an information transmitting/receiving unit 11; a memory 12; a data creating unit 13; a lowest specification calculating unit 14; an image information analysis unit 15; an image information processing unit 16; an image display unit 17; and an operating unit 18. The terminal 1 further includes a radio unit, a control unit, a microphone, and a speaker (each not shown). The terminal 1 includes a data processing unit which processes various data. The processing unit includes at least one of the data creating unit 13; the lowest specification calculating unit 14; the image information analysis unit 15; and the image information processing unit 16.

The information transmitting/receiving unit 11 transmits the presence information, terminal specification information on the own terminal, and other information, and receives the presence information, terminal specification information, and the like, which relate to all the terminals within a group, from the distribution server 4. The received information is stored in the memory 12. Further, the information transmitting/receiving unit 11 transmits data including an image, an audio, or a sound to the PoC server 2, and receives those data from the PoC server 2.

The data creating unit 13 creates various data to be multicast. To be specific, the data creating unit 13 creates data based on the specifications of the own terminal stored in the memory 12. Alternatively, the data creating unit 13 creates data based on calculation results of the lowest specification calculating unit 14. The lowest specification calculating unit 14 calculates the lowest specifications from among specifications of all the terminals within the group, and stores the calculation results in the memory 12. The term "lowest specifications" represents, for example, a minimum width (Wmin pixel) of a screen resolution and a minimum height (Hmin pixel) of the screen resolution.

The image information analysis unit 15 selects arbitrary image data from the image data stored in the memory 12, and calculates the number of pixels (W pixel * H pixel) of the image data. Further, the image information analysis unit 15 judges whether or not the selected image data is within the range of the lowest specifications (Wmin pixel * Hmin pixel). If the selected image data is not within the range of the lowest specifications (Wmin pixel * Hmin pixel), the image information processing unit 16 reduces the image to within the range of the lowest specifications without changing an aspect ratio of the image. Further, the image information processing unit 16 can compress the image data and convert a format of the image data depending on the specifications and capabilities of the terminals to which data is to be transmitted. The image display unit 17 displays the image data etc. transmitted/received by the information transmitting/receiving unit 11. The operating unit 18 includes a key input unit.

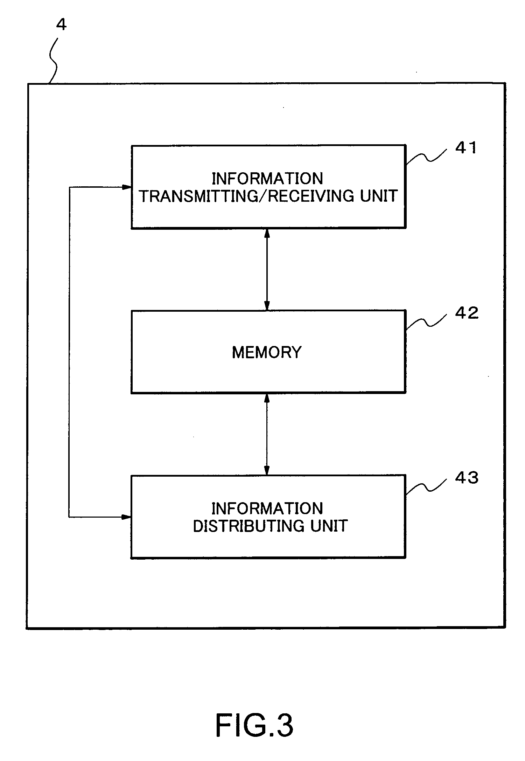

Referring to FIG. 3, the distribution server 4 includes: an information transmitting/receiving unit 41; a memory 42; and an information distributing unit 43. The information transmitting/receiving unit 41 transmits/receives the presence information and the terminal specification information to/from the terminal 1, and stores the received information in the memory 42. When a plurality of terminals exist within a group, the information distributing unit 43 distributes the terminal specification information on all the terminals within the group, to all the terminals within the group.

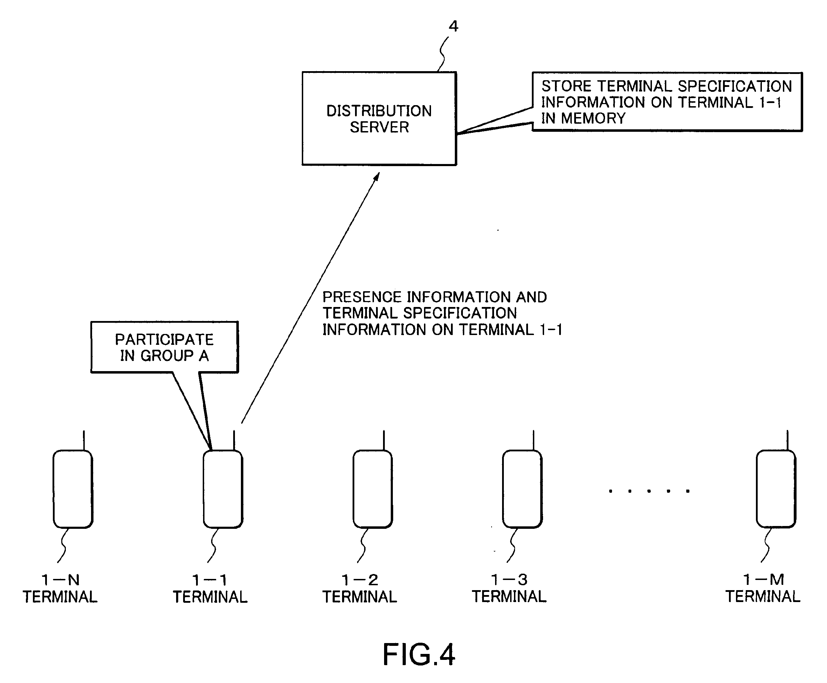

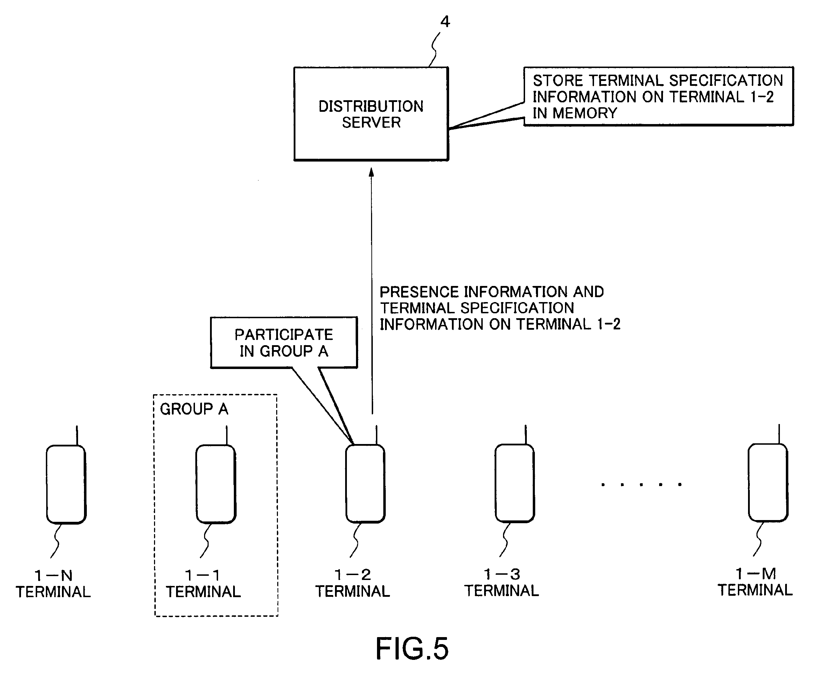

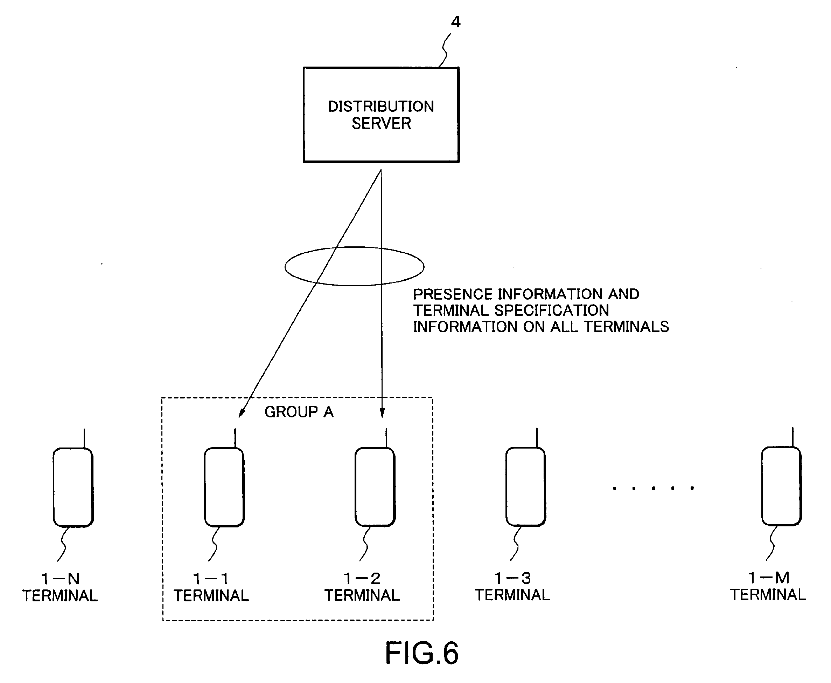

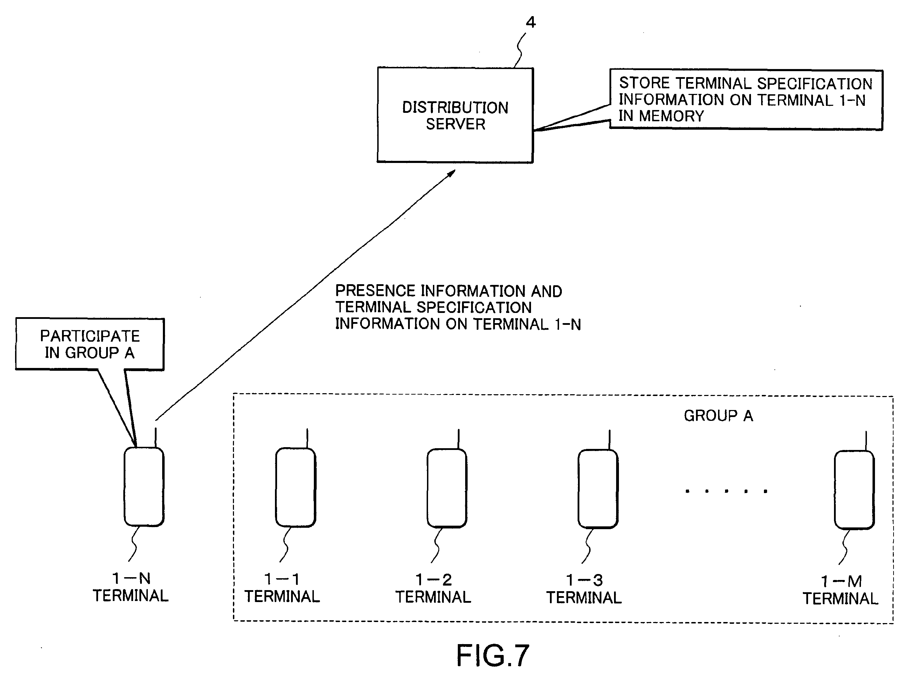

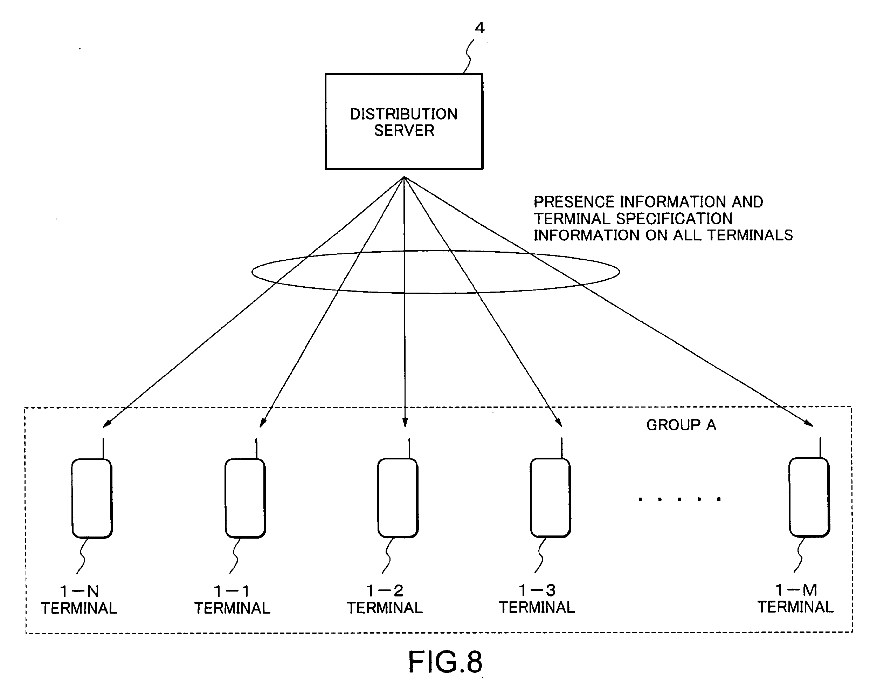

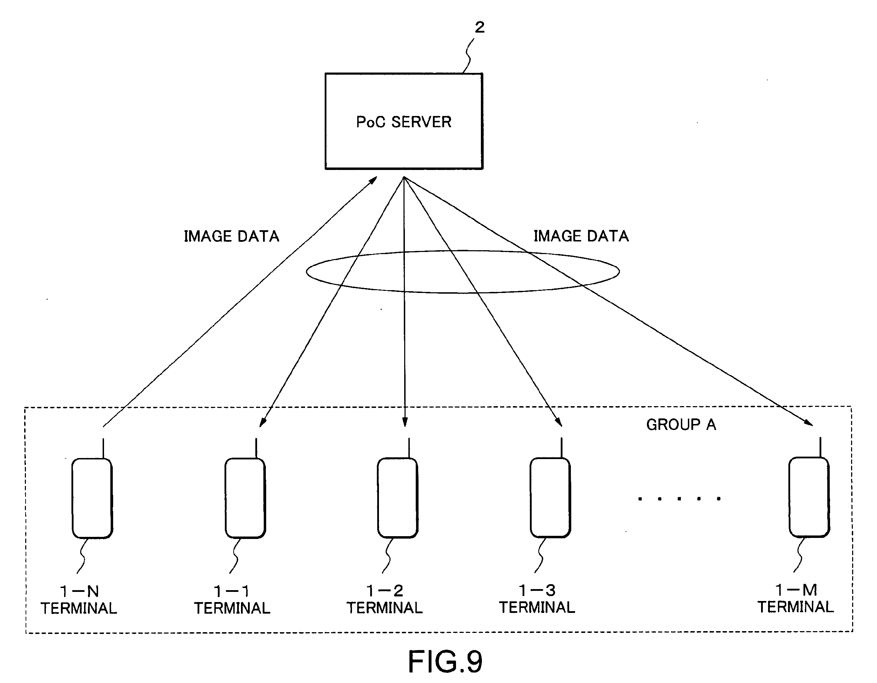

FIGS. 4 to 9 show an operational example of the multicast system. In FIG. 4, a terminal 1-1 transmits the presence information and the terminal specification information on the own terminal to the distribution server 4 to participate in a group A. The distribution server 4 stores the terminal specification information in the memory 42. At this time, the group A includes no other terminals, so the distribution server 4 does not distribute the terminal specification information within the group A to the terminal within the group A (in this case, terminal 1-1). In FIG. 5, a terminal 1-2 transmits the presence information and the terminal specification information on the terminal 1-2 to the distribution server 4 to participate in the group A. The distribution server 4 stores the terminal specification information on the terminal 1-2 in the memory 42. In FIG. 6, the distribution server 4 distributes the terminal specification information on all the terminals within the group A stored in the memory 42, to all the terminals (in this case, terminals 1-1 and 1-2) within the group A. After that, the operation steps as described above are repeated, whereby the distribution server 4 each time stores the terminal specification information on all the terminals within the group A. In FIG. 7, a terminal 1-N transmits the presence information and the terminal specification information on the terminal 1-N to the distribution server 4 to participate in the group A. The distribution server 4 stores the terminal specification information on the terminal 1-N in the memory 42. In FIG. 8, the distribution server 4 distributes the presence information and the terminal specification information on all the terminals within the group A stored in the memory 42, to all the terminals within the group A. In FIG. 9, the terminal 1-N creates image data based on the terminal specification information on all the terminals within the group A received from the distribution server 4, and transmits the image data to the PoC server 2. The PoC server 2 multicasts the image data to all the terminals 1-1 to 1-M within the group A except the terminal 1-N.

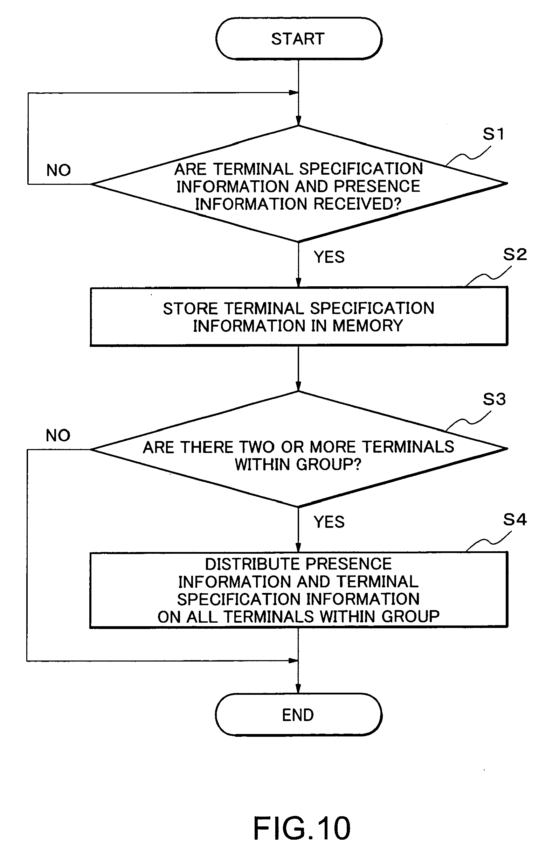

FIG. 10 shows an operational example of the distribution server 4. The distribution server 4 receives the presence information and the terminal specification information from a terminal within the group A (step S1), and stores the information in the memory 42 (step S2). The distribution server 4 counts the number of the terminals (i.e. the number of the members) within the group A (step S3), and if there is one terminal (NO in step S3), the processing comes to an end. Alternatively, if there are two or more terminals 1 within the group A (YES in step S3), the distribution server 4 distributes the presence information and the terminal specification information on all the terminals within the group A, to all the terminals within the group A (step S4).

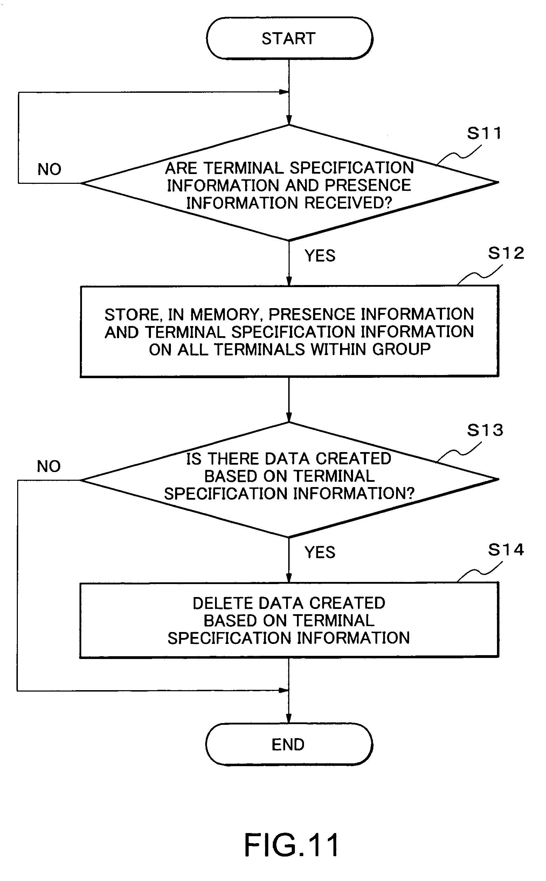

FIG. 11 shows an operational example of the terminal. Upon reception of the presence information and the terminal specification information on all the terminals (YES in step S11), the terminal stores those information in the memory 12 within the terminal (step S12). Further, the terminal checks whether or not there exists data already created based on the terminal specification information (step S13). If there exists the data already created based on the terminal specification information (YES in step S13), the terminal deletes the data (step S14). If the data does not exist (NO in step S13), the terminal ends the processing.

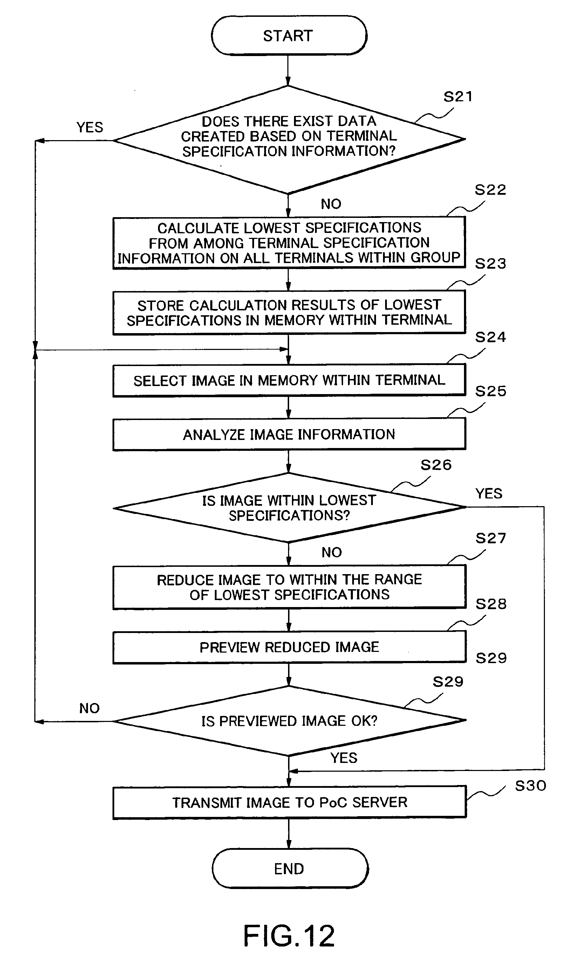

FIG. 12 shows a process example in which the terminal processes data to be multicast to other terminals within the group A, based on the terminal specification information on all the terminals within the group.

The terminal checks whether or not there exists, in the memory 12 within the terminal, the data already created based on the received terminal specification information (step S21). If there does not exist the data (NO in step S21), the lowest specifications are calculated from the terminal specification information on all the terminals within the group (step S22). The term "lowest specifications" represents, for example, the lowest specifications of a screen resolution (a minimum width Wmin pixel and a minimum height Hmin pixel). The terminal stores, in the memory 12 within the terminal, created data on the calculation results of the lowest specifications (step S23).

When the data on the calculation results of the lowest specifications is stored in the memory 12, or if there already exists the data created based on the terminal specification information (YES in step S21), the terminal selects an arbitrary image from image data in the memory 12 within the terminal (step S24), and analyzes the number of pixels of the image (W pixel * H pixel) (step S25). If the number of pixels of the analyzed image is within the range of "Wmin pixel * Hmin pixel" (YES in step S26), the terminal transmits the image to the PoC server 2 (step S30).

If the number of pixels of the analyzed image is not within the above-mentioned range (NO in step S26), the terminal reduces the image to within the above-mentioned range of "Wmin pixel * Hmin pixel" without changing the aspect ratio of the image (step S27). The terminal previews the processed image on the image display unit 17 (step S28). If a user of the terminal judges that the previewed image is displayed clearly (YES in step S29), the user transmits the image to the PoC server 2 (step S30). If the user of the terminal judges that the previewed image is not clear (NO in step S29), the user selects another image (step S24).

According to the above-mentioned process, the user of the terminal can transmit, to a given terminal or two or more given terminals within the group A, an image that can be displayed clearly by those terminals simultaneously.

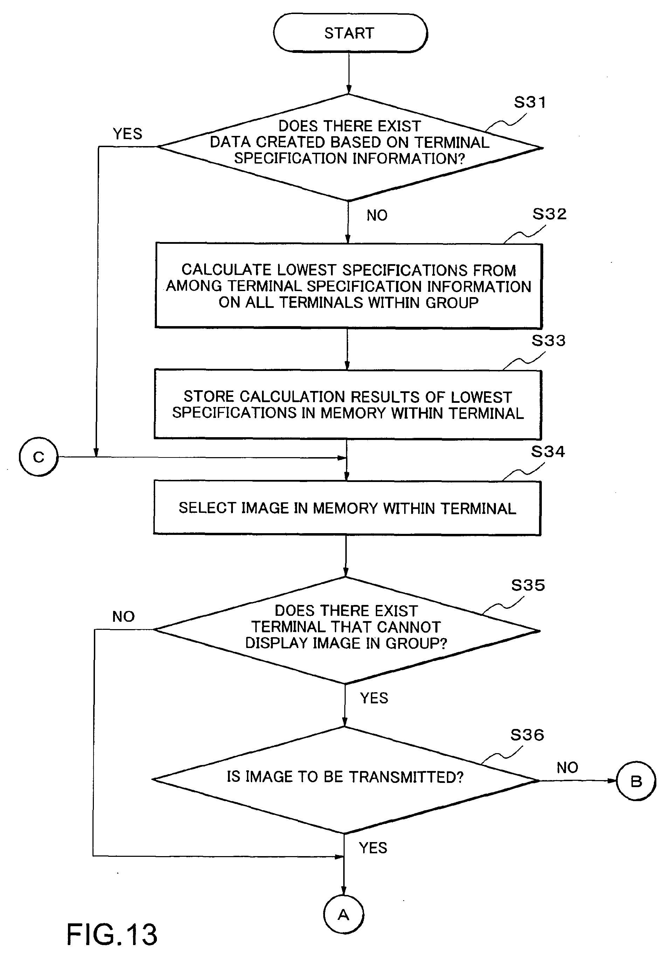

FIG. 13 shows another operational example of the terminal according to the present invention. In this operational example, the terminal specification information of which the terminal notifies the distribution server 4 contains information indicating whether or not an image can be displayed. The terminal checks whether or not there exists, in the memory 12 within the terminal, data created based on the terminal specification information (step S31). If the data does not exist (NO in step S31), the lowest specifications of a screen resolution (a minimum width Wmin pixel and a minimum height Hmin pixel) are calculated from the terminal specification information on all the terminals within the group A (S32). The terminal stores data on the calculated lowest specifications in the memory 12 within the terminal (S33).

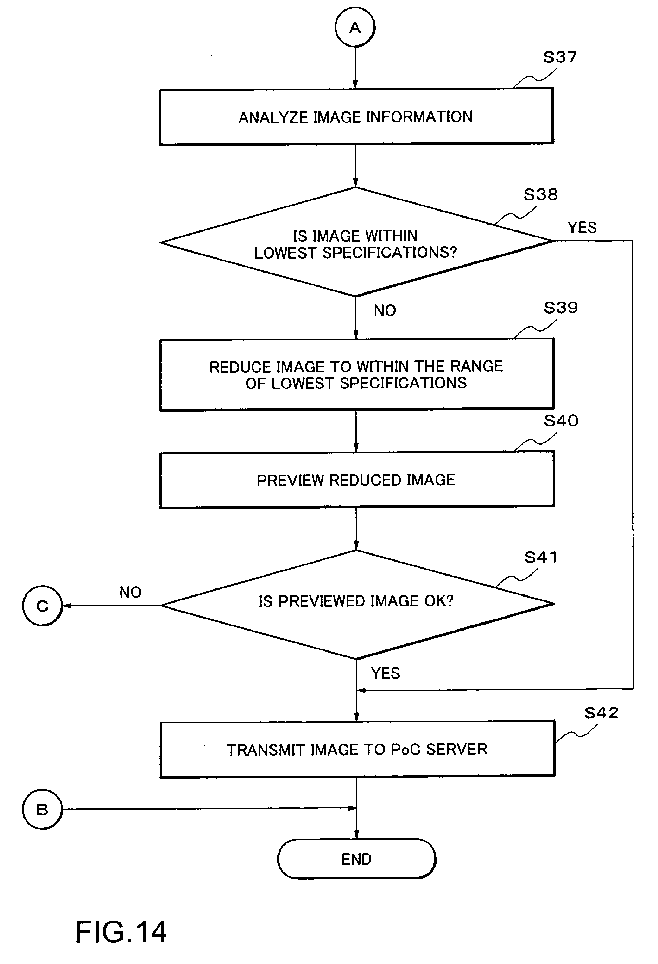

If the above-mentioned data on the calculated lowest specifications is stored in the memory 12 within the terminal, or if there exists the data already created based on the terminal specification information (YES in step S31), the terminal selects an arbitrary image from the image data in the memory 12 within the terminal (step S34). The terminal checks the terminal specification information on all the terminals stored in the memory 12 within the terminal, and judges whether or not there exists a terminal that cannot display an image within the group A (step S35). If the terminal that cannot display an image exists within the group A (YES in step S35), the terminal prompts the user of the terminal to judge whether or not to transmit an image (step S36). To be specific, the terminal displays, for example, an alert message on the display unit. If the user aborts image transmission (NO in step S36), the processing comes to an end. If the user intends to transmit an image (YES in step S36), or if the terminal that cannot display an image does not exist within the group A (NO in step S35), the terminal executes an operation as shown in FIG. 14.

Referring to FIG. 14, the terminal first analyzes the number of pixels (W pixel * H pixel) of an image (step S37). If the number of pixels is within the range of "Wmin pixel * Hmin pixel" (YES in step S38), the terminal transmits the image to the PoC server 2 (step S42). If the above-mentioned number of pixels is not within the range of the lowest specifications (NO in step S38), the terminal reduces the image to within the above-mentioned range of "Wmin pixel * Hmin pixel" without changing the aspect ratio of the image (step S39). The terminal previews the reduced image on the image display unit 17 (step S40). If the user of the terminal judges that the previewed image is displayed clearly (YES in step S41), the user transmits the image to the PoC server 2 (step S42). If the user of the terminal judges that the previewed image is not clear (NO in step S41), the user selects another image (step S34). After that, the operations of step S34 and the subsequent steps are executed.

The above-mentioned terminal specifications include at least one of information items on a screen resolution, the number of display colors, a maximum data size that can be received, and a corresponding application. The maximum number of pixels that can be reduced for display can be used instead of the screen resolution. In this case, it is possible to multicast an image having a larger number of pixels.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

Further, it is the inventor's intent to retain all equivalents of the claimed invention even if the claims are amended during prosecution.

## Claims

1. A multicast system, comprising:
a multicast server for multicasting data to terminals within a group;
a distribution server for receiving, from the terminals, information containing specifications of the terminals, and transmitting, to each terminal within the group, the specifications of all the terminals within the group; and
a terminal for transmitting data to the multicast server,
the terminal including a data processing unit for processing data to be transmitted to the multicast server, based on information received from the distribution server.

2. A multicast system according to claim 1, wherein the data processing unit processes a size and a format of the data to be transmitted based on the specifications of all the terminals within the group.

3. A multicast system according to claim 1, wherein the data transmitted to the multicast server by the terminal includes an image.

4. A multicast system according to claim 1, wherein the terminal includes a lowest specification calculating unit for calculating lowest specifications from among specifications of all the terminals within the group.

5. A multicast system according to claim 4, wherein the data processing unit processes the image to cause the image included in the data to be within a range of the lowest specifications among the specifications of the terminals within the group.

6. A multicast system according to claim 5, wherein the data processing unit reduces an image without changing an aspect ratio thereof.

7. A multicast system according to claim 1, wherein the specifications of the terminal include at least one of information items on a screen resolution, a number of display colors, a maximum data size that can be received, and a corresponding application.

8. A multicast system according to claim 1, wherein the distribution server receives, from the terminal, information indicating whether or not an image can be displayed, and transmits the information to terminals within the group.

9. A multicast system according to claim 1, wherein the multicast server is a push to talk over cellular (PoC) server.

10. A multicast system according to claim 1, further comprising a group server for holding information on group members.

11. A terminal for multicasting data to other terminals within a group via a multicast server, comprising a data processing unit for processing data to be transmitted based on specifications of all the terminals within the group.

12. A terminal according to claim 11, wherein the data processing unit processes a size and a format of the data to be transmitted based on the specifications of all the terminals within the group.

13. A terminal according to claim 11, wherein the data to be multicast includes an image.

14. A terminal according to claim 11, further comprising a lowest specification calculating unit for calculating lowest specifications from among specifications of all the terminals within the group.

15. A terminal according to claim 14, wherein the data processing unit processes the image to cause the image included in the data to be within a range of the lowest specifications among the specifications of the terminals within the group.

16. A terminal according to claim 15, wherein the data processing unit reduces an image, which is the data, without changing an aspect ratio thereof.

17. A terminal according to claim 11, wherein the specifications of the terminal include at least one of information items on a screen resolution, a number of display colors, a maximum data size that can be received, and a corresponding application.

18. A multicast method for multicasting data from one terminal to other terminals within a group, comprising:
transmitting information containing specifications of the terminals to a distribution server;
receiving the specifications of all the terminals within the group from the distribution server;
processing data to be multicast based on the specifications; and
transmitting the processed data to the multicast server.

19. A multicast method according to claim 18, further comprising previewing the processed data.

20. A multicast method according to claim 18, wherein the data includes an image.

21. A multicast method according to claim 18, wherein the information containing the specifications of the terminals further contains information indicating whether or not an image can be displayed.

22. A multicast method according to claim 21, further comprising judging whether or not there exist a terminal that cannot display an image, within the group.

23. A multicast method according to claim 18, wherein the processing of data includes:
calculating lowest specifications from among specifications of all the terminals within the group; and
processing an image to be multicast to within a range of the lowest specifications.
